# EUROPEAN PATENT APPLICATION

(11) **EP 3 922 844 A1**
(43) Date of publication of application: **15.12.2021**
(21) Application number: 20752921.5
(22) Date of filing: 02.01.2020
(51) Int. Cl.: F03D 13/20, F03D 13/10, B66C 23/20, B66C 23/72

(54) **APPARATUS FOR INSTALLATION AND DISASSEMBLY OF WIND TURBINE AND CONSTRUCTION METHOD USING SAME**

(30) Priority: 07.02.2019 KR 20190014314
(71) Applicant: Chea, Bongchul, Gyeonggi-do 16433 (KR)
(72) Inventor: Chea, Bongchul, Gyeonggi-do 16433 (KR)
(74) Representative: Patel, Binesh
(86) International application number: PCT/KR2020/000073
(87) International publication number: WO 2020/162665

(57) **Abstract**

An equipment for installing and dismantling of a wind turbine system including a tower, a nacelle and a blades is capable of self-climbing along the tower via upper and lower grippers moving up and down the supporting frame equipped with two booms along the tower. The two booms aren't able to turn around in horizontal plan but are able to hoist, for example, the nacelle and pivot it to the top of the tower before placing it on the positioning frame. In order to combine the nacelle to the tower, the nacelle resting on the positioning frame shall be adjusted to the location of the tower in horizontal plan before the positioning frame is lowering it to the tower.

## Description

### 1. Field of invention

The present invention has in relation to installing and dismantling of wind turbine system by using self-climbing system, more specifically the wind turbine system includes a tower that gets more wind as it rises high to generate more electricity but the higher the tower it requires much bigger crane for installation because the crane has to hoist the heavy nacelle on the top of the tower and long blades to be attached to the nacelle as well. So the construction cost of wind turbine installation goes high as the wind turbine gets high. But the tower has been designed strong enough as it standby the strongest wind in consideration of safety so there is most likely to take advantage of stiffness of the tower for the measure as the self-climbing crane moving up and down along the tower for assembling of wind tower system.

### 2. Background

Lots of wind turbines are being installed as an alternative energy resource and the higher the height of wind turbines the better efficiency of the power generator. Currently, the height of wind turbine is determined by the capacity of the crane. So the concept of the higher the better in wind power is well recognized but in reality it cannot be easily achieved due to the height limit of the crane.

The raised problem herein is to invent the equipment to self-climb along the tower whatever height it is and to hoist the segment of tower, a nacelle and a blade to position to the right place to put together considering no harm to the tower from the stress induced by the equipment on the tower. In world wide it gets bigger and bigger to demand for the wind power offshore thanks to its high efficiency but there also exist the problem with the equipment for construction as the charge for the large vessel to be mobilized goes very expensive.

Korean Publication of Unexamined Patent Applications No. 10-2010-0045404 (2010.05.03) provides construction equipment (50) of the floating type wind power on the deep sea. For installing offshore wind power, the large equipment is required with many working days which may incur high cost.

Pylons and piers, the term called in bridge building for tower in wind power, are generally built by assembling formworks, reinforcing bars and casting concrete on site due to their heavy weight. This current working method also has a disadvantage of incurring a lot of working hours and cost.

### Description of invention (Summary)

To resolve the current problems that cost a lot of money and time erecting wind power and casting structure of bridge on site so the solution to the problem is to develop the equipment for installing and dismantling of wind turbine via self-climbing, which is the object of this invention. And it has been devised so the equipment of this invention which comprises a supporting frame with two booms and a self-climbing apparatus with grippers that is capable of moving up and down the equipment along the tower which is in taper though as it rises high.

The self-climbing apparatus associated with the actuators connecting the upper and lower grippers which can change its diameter according to the tower's via hydraulic device which is able to expand or contract to change its size.

The positioning frame on supporting frame shall be used to position, for example, the nacelle hoisted by the two booms and lifting means to be fitted to the top of the tower by lowering the nacelle after adjusting the nacelle exactly in horizontal plan to the tower as it is being rested on the positioning frame because the two booms on the supporting frame for hoisting the nacelle are not able to rotate in horizontal plan but able to pivot in vertical so they do not facilitate the nacelle to be fitted to the top of the tower by themselves. There is another alternative way in this invention for positioning of facilities to the tower or the nacelle. The catcher connecting both ends of the two boom can adjust the jig holding, for example, segment of tower or nacelle by operating the actuators comprised inside of it.

### Advantages of the invention

This invention presented affords numerous advantages over the systems currently available. The advantages are hereby,
1. Construction period of building wind power and bridge shall be shortened because the apparatus of the invention is simple and compact in size so it can be transported by smaller number of trailers and shall be assembled in short time on site.
2. The equipment of the invention shall be cheaper than the conventional revolving crane due to simplicity of it.
3. Maintenance cost of wind power shall be down comparing to current cost because the equipment of the invention takes advantage of the tower for self-climbing.
4. With the invention, the height of wind power shall rise further higher to get much higher efficiency because it shall be able to move up along the tower as far as the tower is manufactured and installed

### Description of the figures

To gain a better understanding of the object of this invention, the attached drawing shows a preferred practical embodiment of an equipment for installing and dismantling of wind turbine and construction method with it.
FIG. 1 shows a perspective view of a wind turbine assembly and an equipment self-climbed on the tower, in its preferred embodiment with the installing of the wind turbine.
FIG. 2 shows a perspective view of hoisting a nacelle by the equipment, in its preferred embodiment with lifting means hoisting the nacelle before pivoting it by a two booms.
FIG. 3 shows a perspective view of pivoting the nacelle by the equipment, in its preferred embodiment with the two booms being pivoted about a pivoting shaft by a boom pivoting actuator.
FIG. 4 shows a perspective view of pivoting the nacelle in different way by the equipment, in its alternative embodiment with a jig holding the nacelle.
FIG. 5 shows a perspective view of resting the nacelle on the equipment, in its preferred embodiment with a positioning frame with a second actuator for lowering the nacelle to the tower.
FIG. 6 shows a perspective view of various extra ways of balancing the tower during hoisting the nacelle, in its preferred embodiment with a tower ballast.
FIG. 7 shows a perspective view of installing of a blade by the equipment, in its preferred embodiment with the lifting means and with a jig for the blade.
FIG. 8 shows a perspective view of mounting a pier cap on a pier in bridge building by the equipment, in its preferred embodiment with multiple equipments attached to the piers.
FIG. 9 shows a perspective view of the equipment self-climbing along the tower, in its preferred embodiment with a self-climbing apparatus with a first actuator connecting an upper gripper and a lower gripper.
FIG. 10 shows a perspective view of the equipment self-climbing along the tower, in its alternative embodiment with a self-climbing apparatus with a first actuator connecting a supporting frame and either of the upper or lower grippers.
FIG. 11 shows a perspective view of the equipment self-climbing along the tower, in its alternative embodiment with a hoisting cable connecting the equipment and an anchorage on the upper of the tower.
FIG. 12 shows a side view of the equipment self-climbed on the tower, in its alternative sectional embodiment with the gripper pressing the tower with a forth actuators and a catcher connecting both ends of two booms to hold a segment of tower before being installed on the tower pinned to the foundation.
FIG. 13 shows a side view of the equipment self-climbed on the tower offshore, in its alternative embodiment with the winch system installed on a foundation of steel structure attached to the tower or on a jack-up barge.

### Detailed Description (Preferred embodiment of the invention)

Details of such exemplary embodiment of the invention are set forth herein.

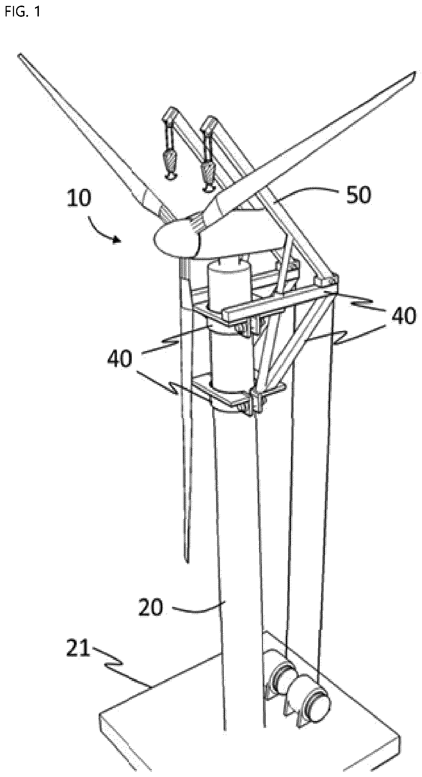

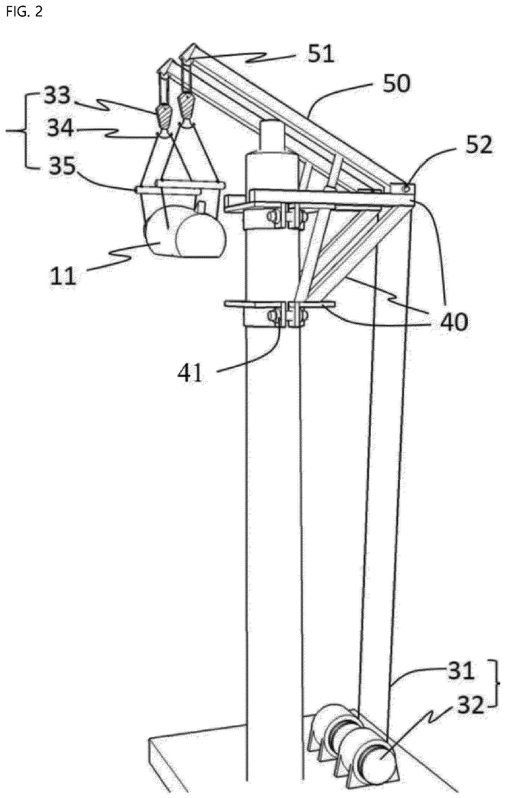

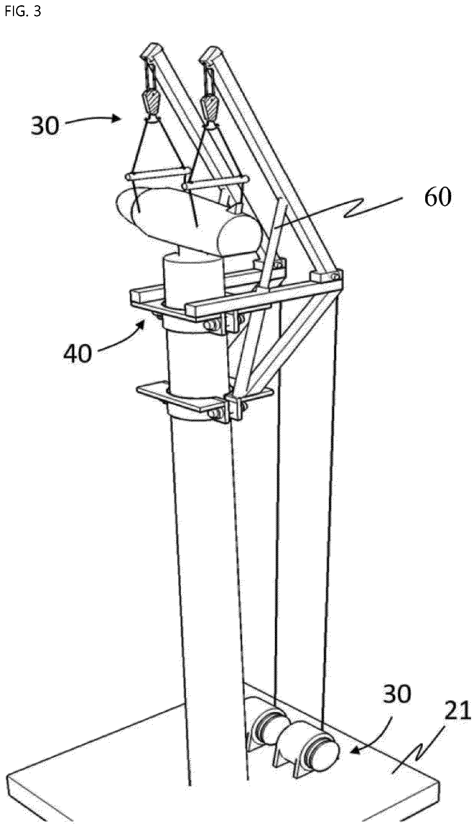

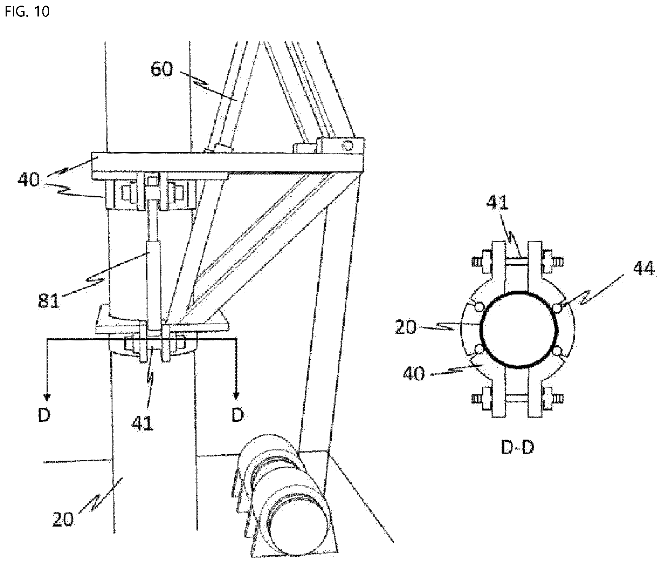

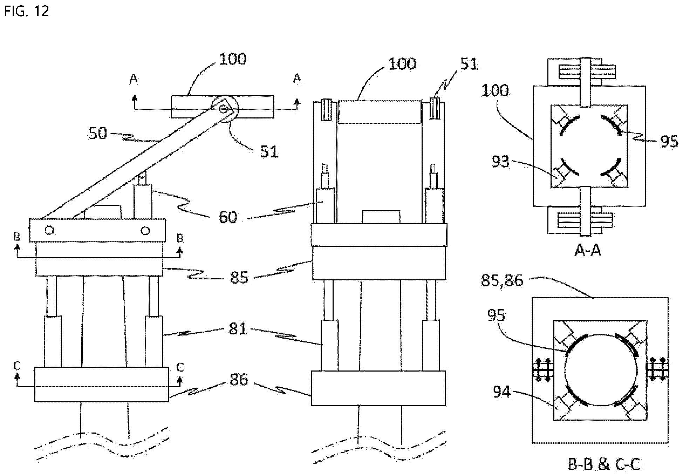

FIG. 1 shows a perspective view of a wind turbine assembly (hereafter, "wind turbine") and an equipment of this invention operating on the tower for installing of the wind turbine 10. As well known by those skilled in the art, the tower 20 pinned to the foundation. The tower 20 is tapered as it goes high and it is erected in a way that the segments of tower are assembled one by one to the top of assembled segments fixed to the foundation 21. The equipment of this invention comprises supporting frame 40 releasably secured to the tower 20 via a plurality of first coupling device 41 (FIG. 10) which combines each parts of the supporting frame 40 about the tower 20. It is preferable to choose the first coupling device 41 out of mechanic type of bolts, pins or hydraulic ones. The selection depends on manufacturing and maintenance cost. The two booms 50 are combined to the supporting frame 40 via a pivot shaft 52 (FIG. 2) which is able to pivot the two booms 50 to move, for example, the nacelle 11 to the top of the tower 20 as it is being suspended by the two booms 50 (FIG. 3,4,5). And each of two booms 50 terminates in a second pulley 51 at one end of boom 50. In FIG. 1 the supporting frame 40 shows to comprise double layers though, it is not limited to the number of layers but it is even preferable to have single layer of supporting frame 40 shown as FIG. 12.

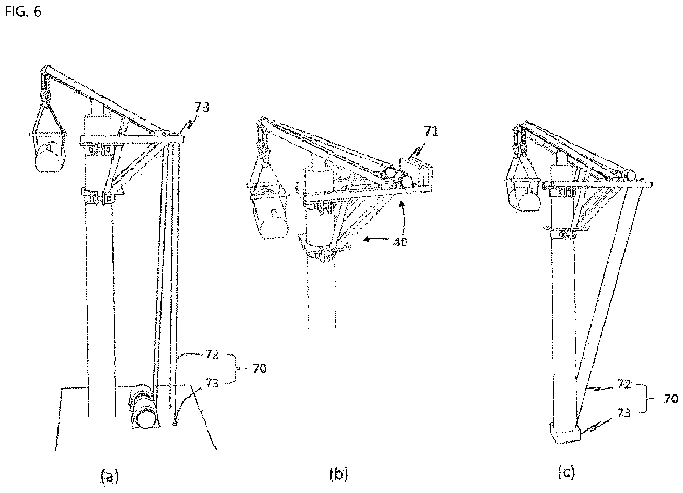

FIG. 2 shows a perspective view of hoisting the nacelle 11 by a lifting means 30 which comprises winch system 32 reeling a wire rope 31 which runs along each boom 50 and the wire rope 31 connects several times the second pulley 51 and a first pulley 33 having a hook 34 suspending a jig 35 with the nacelle 11(for example). The winch system 32 as shown is running on the foundation 21 though, it can be located on the supporting frame 40 referring to (b), (c) in FIG. 6. It is preferable that the lifting means 30 shall lift up, for example, the nacelle as high as it can operate before the two boom 50 pivots about the pivot shaft.

FIG. 3 shows a perspective view of pivoting the two booms 50 about the pivot shaft by operating a boom pivoting actuator 60 connecting the each of two booms 50 and the supporting frame 40. As the two booms 50 are rotating, the nacelle 11 being suspended by lifting means 30 shall move to the top of the tower.

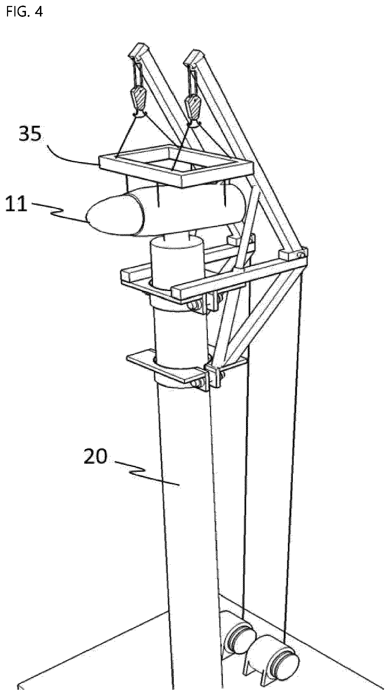

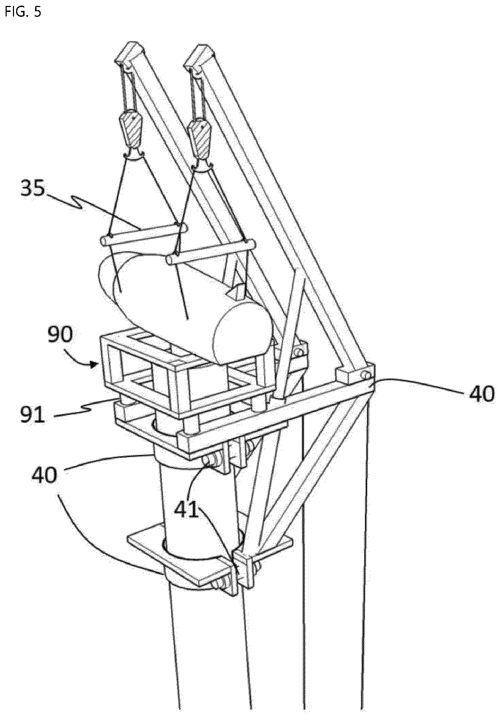

FIG. 4 shows a perspective view of holding the nacelle by a jig 35 for lifting of the nacelle. It is preferable to have the jig 35 adapted to the holding points in the nacelle and also to have the jig 35 modified to cover the both sides of nacelle 11 so that it shall be rested on the positioning frame 90 instead of the nacelle rested directly on it (FIG. 5).

FIG. 5 shows a perspective view of a positioning frame 90 to lower the nacelle 11 to the tower after adjusting the nacelle in horizontal plan to the tower as it is being rested on the positioning frame 90 which comprises a second actuators 91 placed on the supporting frame 40. There is no drawings though, the horizontal positioning of the nacelle on the positioning frame 90 shall be done preferably with a hydraulic device inside or outside nacelle because the two booms 50 are not able to rotate in horizontal plan to move the nacelle to the right XY coordinate of tower but they are only able to pivot vertically to place the nacelle 11 on the positioning frame 90.

FIG. 6 shows a perspective view of various way of setting up a tower ballast 70. The heavy nacelle offshore could harm the tower in structural point view as big moment from lifting up the nacelle shall occur in the tower. As a preventive measure for the tower, it is preferable to select the one as a tower ballast 70 out of a steel wire 72 to connect the supporting frame 40 and a fixing points 73 on the foundation (a) or to connect the supporting frame 40 and the one on the lower part of the tower(c) or a weight 71 to be placed on the supporting frame 40 (b).

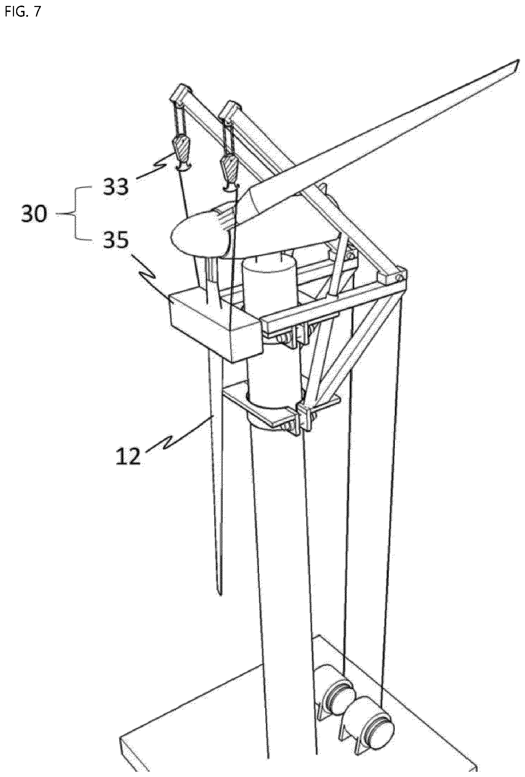

FIG. 7 shows a perspective view of combining of a blade 12 to the nacelle 11 (hereafter, "nacelle" means including "hub") with a jig 35 for a blade 12 which is being suspended in vertical way via the two booms 50 and the lifting means 30.

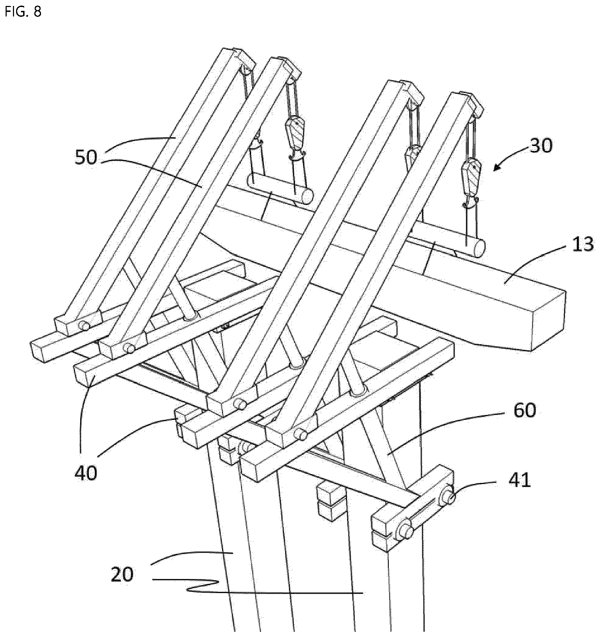

FIG. 8 shows a perspective view of another usage of this invention in bridge building site. At least one of equipment attaches to piers 20, in other terms of tower, for placing of pile cap 13 on the top of the piers. The supporting frame 40 about the pier shall preferably be tightened by the first coupling device 41.

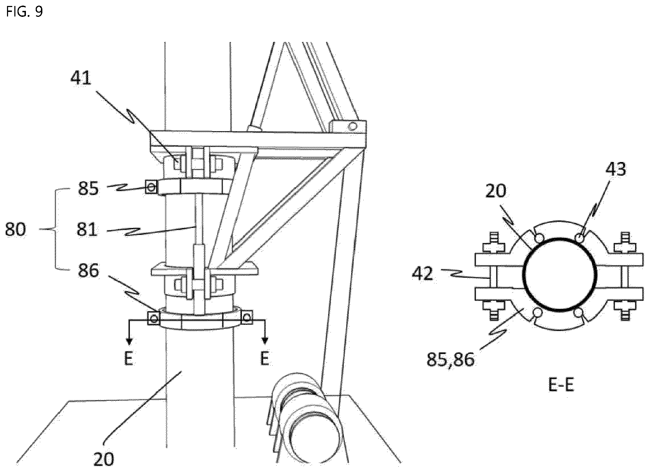

FIG. 9 shows a perspective view of an apparatus of self-climbing 80 with a first actuator 81 connecting an upper and a lower grippers 85, 86 which is to be tighten according to diameter changing of the tower 20, as it is going up, by a second coupling devices which are to reduce the space from parts of the gripper 85, 86. And self-climbing apparatus 80 comprises a upper gripper 85 and a lower gripper 86 enclosing around the tower 20 by friction force occurred by a second coupling device 42. it comprises a first actuators 81 connecting the two grippers 85, 86 or connecting either of the grippers 85, 86 and the supporting frame 40 to climb along the tower via the first actuators 81 as the grippers 85, 86 holding and releasing the tower 20 in alternate way. The alternative holding way of grippers (referring to FIG. 12) is that a forth actuators 94 are pressing the tower to occur the friction between the tower 20 and the gripper 85, 86. The grippers comprises pads 95 at the end of the forth actuators 94 for protecting paint on the surface of the tower. And it is preferable for the gripper 85, 86 to comprise a hinges 43 to adapt itself according to the changing diameter of the tower.

FIG. 10 shows a perspective view of a first actuators 81 connecting a support frame 40 and either of upper or lower grippers 85, 86. And it is preferable for the support frame 40 to comprise a hinge 43 to adapt itself according to the changing diameter of the tower.

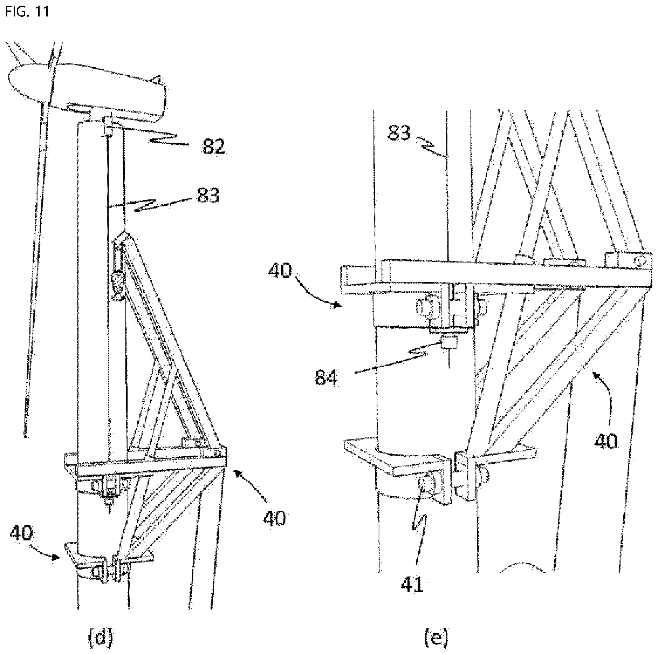

FIG. 11 shows a perspective view of a hoisting cable 83 connecting the anchorage 82 located on the upper tower and a push up actuator 84 under the supporting frame which shall be moved up and down by the operation of the push up actuator 84.

FIG. 12 shows a side view of a catcher rotatably secured to both sides of the two booms 50 via pins (no number) which is able to rotate the catcher comprising a third actuators 93 which are able to suspend the segment of tower, the nacelle or the blade to position them to the facility assembled in advance to the tower(refer to section A-A). It is not shown in this FIG. 12 though, it is preferable for the third actuators 93 to be used to positioning either of a nacelle or a blade as the catcher 100 is suspending them with each of jigs 35.

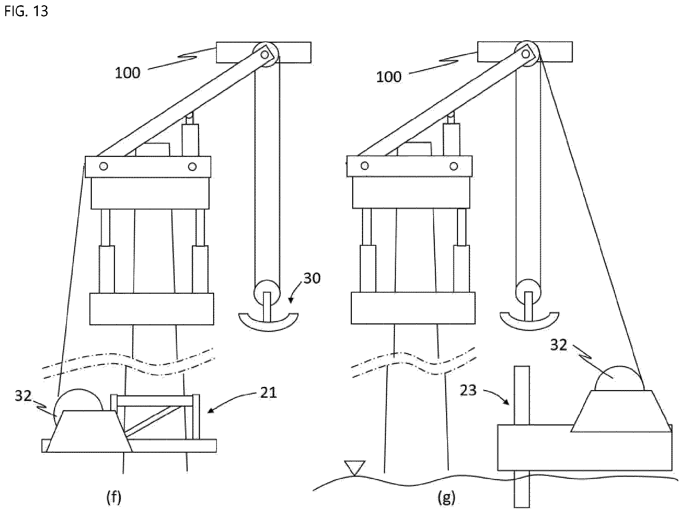

FIG. 13 shows a side view of alternative way of operation of winch system 32 installed on the foundation 21 of steel beam or a jack-up barge 23 for the wind turbine off shore.

## Claims

1. A equipment for installing and dismantling of wind turbine system on a foundation, the equipment comprising:
a structural tower 20 supporting associated wind turbine system on a foundation 21;
wherein said tower 20 is assembled in vertical one by one from several segments;
a two booms 50 terminating in a second pulley 51 at one end and terminating in a pivot shaft 52 at the other end of each boom;
wherein said two booms 50 are located on either side around the tower 20 in the center;
a supporting frame 40 being releasably securable to the tower 20;
wherein said supporting frame 40 comprises a first coupling device 41 for assembling the supporting frame 40 about the tower and is combined with the two booms 50 by the pivot shaft 52;
a self-climbing apparatus 80 moving the supporting frame 40 up and down along the tower;
wherein said self-climbing apparatus 80 comprises a upper gripper 85 and a lower gripper 86 enclosing about the tower 20 by friction force occurred by a second coupling devices 42 pressing the tower. And it comprises a first actuators 81 connecting the two grippers 85,86 or either of the grippers 85, 86 and the supporting frame 40 to climb along the tower via the first actuators 81 as either of grippers 85, 86 holding and releasing the tower 20 in alternate way;
a lifting means 30 for a segments of tower to be placed on a tower pinned to the foundation, a nacelle 11 to be installed on the top of the tower 20 and a blades 12 to be connected to the nacelle 11;
wherein said lifting means 30 comprises a winch system 32 reeling a wire rope 31 winding several times a second pulley 51 on each of the two booms 50 and a first pulley 33 combined with a lifting hook 34 suspending a jig 35 for the tower, the nacelle and the blades respectively and wherein the lifting means 30 are attached to each of two booms 50 therefore it runs along both sides around the tower 20;
a positioning frame 90 for the nacelle to be connected to the top of the tower being supported by the supporting frame 40;
wherein said positioning frame 90 comprises a second actuators 91 lowering the nacelle to the top of the tower once the nacelle with the jig is placed on the positioning frame 90 by the lifting means 30 and is adjusted its position to the tower 20;
a boom pivoting actuator 60 for rotating of each of two booms 50 about its pivot shaft 52;
wherein said boom pivoting actuator 60 connects its opposite ends to the supporting frame 40 and each of the two booms 50.

2. The equipment of claim 1, further comprising means for installing of a tower ballast 70;
wherein said the tower ballast 70 during operation of the lifting means 30 comprises at least one out of three ways of firstly, a weight 71 on the supporting frame, secondly, a steel wire 72 and fixing devices 73 located on the supporting frame 40 and the lower part of the tower 20, thirdly, a steel wire 72 and fixing devices 73 on the supporting frame 40 and the foundation 21.

3. The equipment of claim 1 wherein the winch system 32 in the lifting means 30 is **characterized in** being placed to the one out of the foundation 21, the supporting frame 40, a barge 23 or a vehicle.
